Europäisches Patentamt

European Patent Office

Office européen des brevets

(19)

(11) Veröffentlichungsnummer: **0 088 921**
**B1**

(12) **EUROPÄISCHE PATENTSCHRIFT**

(45) Veröffentlichungstag der Patentschrift:
09.04.86

(51) Int. Cl.⁴: **B 23 Q 1/00**

(21) Anmeldenummer: **83101856.9**

(22) Anmeldetag: **25.02.83**

(54) Einrichtung zum Spannen eines Maschinentisches o.dgl. auf einem Maschinenbett.

(30) Priorität: **16.03.82 DE 3209553**

(73) Patentinhaber: **Friedrich Deckel Aktiengesellschaft, Plinganserstrasse 150, D-8000 München 70 (DE)**

(43) Veröffentlichungstag der Anmeldung:
**21.09.83 Patentblatt 83/38**

(72) Erfinder: **Geiger, Michael, Ina-Seidel-weg 8, D-8130 Starnberg (DE)**

(45) Bekanntmachung des Hinweises auf die Patenterteilung:
**09.04.86 Patentblatt 86/15**

(84) Benannte Vertragsstaaten:
**AT CH FR GB IT LI**

(56) Entgegenhaltungen:
**CH - A - 562 657**
**CH - A - 624 328**
**DE - A - 2 061 028**
**DE - A - 2 358 399**
**DE - B - 1 602 825**
**US - A - 3 252 358**
**US - E - 30 680**

LIBER, STOCKHOLM 1986

## Beschreibung

Die Erfindung betrifft eine Einrichtung gemäß dem Oberbegriff des Anspruches 1.

Die im Oberbegriff beschriebene Ausbildung von Maschinentischen findet vor allem bei Wechseltischen oder Paletten für Bearbeitungszentren oder ähnliche Maschinen Verwendung. Die Auflageflächen der Maschinentische bzw. Paletten sowie die Stützflächen des Maschinenbettes sind hochgenau bearbeitet und in den meisten Fällen noch einstellbar, so daß die nacheinander eingewechselten Paletten stets eine genaue, reproduzierbare Lage auf dem Maschinenbett einnehmen. Die Auflageflächen bzw. Stützflächen können darüber hinaus noch formschlüssig ineinandergreifen, so daß sie auch die auf den Maschinentisch in Tischebene wirkenden Kräfte aufnehmen.

Gegen alle den Maschinentisch vom Maschinenbett abhebenden Kräfte wird dieser auf das Maschinenbett gespannt. Dazu dienen in der Regel ein oder mehrere Spannorgane, welche irgendwo am Maschinentisch angreifen und diesen gegen das Maschinenbett ziehen, wie z.B. in der US-A-3252358 gezeigt wird. Dabei besteht jedoch vor allem dann, wenn zwischen den Auflageflächen und dem Angriffspunkt des oder der Spannorgane größere Abstände liegen, die Gefahr, daß sich der Maschinentisch im Bereich der Spannorgane durchbiegt und dadurch eine ungenaue Auflage für das darauf befestigte Werkstück bildet.

Eine gewisse Abhilfe dagegen kann dadurch erzielt werden, daß die gesamte Spannkraft auf möglichst viele, jeweils gering belastete Spannorgane verteilt und so die örtlich auf den Maschinentisch wirkenden Kräfte klein gehalten werden. Dadurch ergibt sich jedoch vor allem bei automatischen Spannsystemen ein großer baulicher und steuerungstechnischer Aufwand und damit eine sehr teure Bauweise.

Es ist die Aufgabe der vorliegenden Erfindung, eine Einrichtung der im Gattungsbegriff beschriebenen Art zu schaffen, welche mit einfachen Mitteln eine sichere, verformungsfreie Spannung des Maschinentisches erlaubt.

Diese Aufgabe ist erfindungsgemäß durch die im Kennzeichen des Anspruchs 1 beschriebenen Mekmale gelöst.

Die erfindungsgemäße Konstruktion erlaubt es, mit einem einzigen Spannorgan auch größere Maschinentische zu spannen. Die zentrale Spannkraft greift nicht unmittelbar am eigentlichen Tischkörper an, sondern wird über die Übertragungsmittel weitgehend in die Nähe der Auflageflächen geleitet, wo sie durch die Stützflächen verformungsfrei aufgenommen werden können.

Die Übertragungsmittel können in beliebiger Weise so gestaltet sein, daß sie die zentral angreifende Spannkraft optimal zu den Auflageflächen verteilt. Eine besonders einfache Ausführung ergibt sich erfindungsgemäß dann, wenn sie durch eine platte gebildet werden, welche zumindest im Bereich dieser Auflageflächen mit der Unterseite des Maschinentisches verbunden ist, während in ihrem Mittenbereich eine Einrichtung für das Angreifen des Spannorgans vorgesehen ist.

Eine bevorzugte Ausführung sieht vor, daß die Platte als Kreisscheibe ausgebildet ist, welche mit ihrem Außenrand am Maschinentisch befestigt ist und daß sie in ihrer Mitte eine Öffnung aufweist, in die das Spannorgan, beispielsweise mit einem automatisch bei der Spann- bzw. Lösebewegung verdrehbaren Spannkopf, bajonettartig eingreift.

In einem anderen Ausführungsbeispiel ist die Kreisscheibe radial geschlitzt, wobei das Spannorgan mit einem pilzartig den Schlitz übergreifenden Spannkopf versehen ist. Bei dieser Lösung kann der Maschinentisch seitlich in seine Arbeitsstellung eingeschwenkt werden.

Die Platte bzw. Kreisscheibe kann grundsätzlich mit dem Maschinentisch einstückig ausgebildet sein; sie ist jedoch bevorzugt als getrenntes Bauteil ausgebildet und mit dem Maschinentisch durch Schrauben oder ähnliche Befestigungsmittel verbunden. Weitere Merkmale und Vorteile der Erfindung sind in den Ansprüchen, der Zeichnung sowie der Zeichnungsbeschreibung enthalten.

Mehrere Ausführungsbeispiele der Erfindung sind in der Zeichnung dargestellt und im folgenden näher beschrieben. Es zeigen:

Fig. 1 einen Querschnitt durch einen Maschinentisch sowie eine Spanneinrichtung in zwei unterschiedlichen Ausführungen;

Fig. 2 eine Ansicht in Richtung des Pfeiles II in Fig. 1 in kleinerem Maßstab;

Fig. 3 eine Ansicht in Richtung des Pfeiles III in Fig. 1;

Fig. 4 eine Darstellung gemäß Fig. 2 mit einer anderen Ausführungsform der die Spannkraft übertragenden Platte.

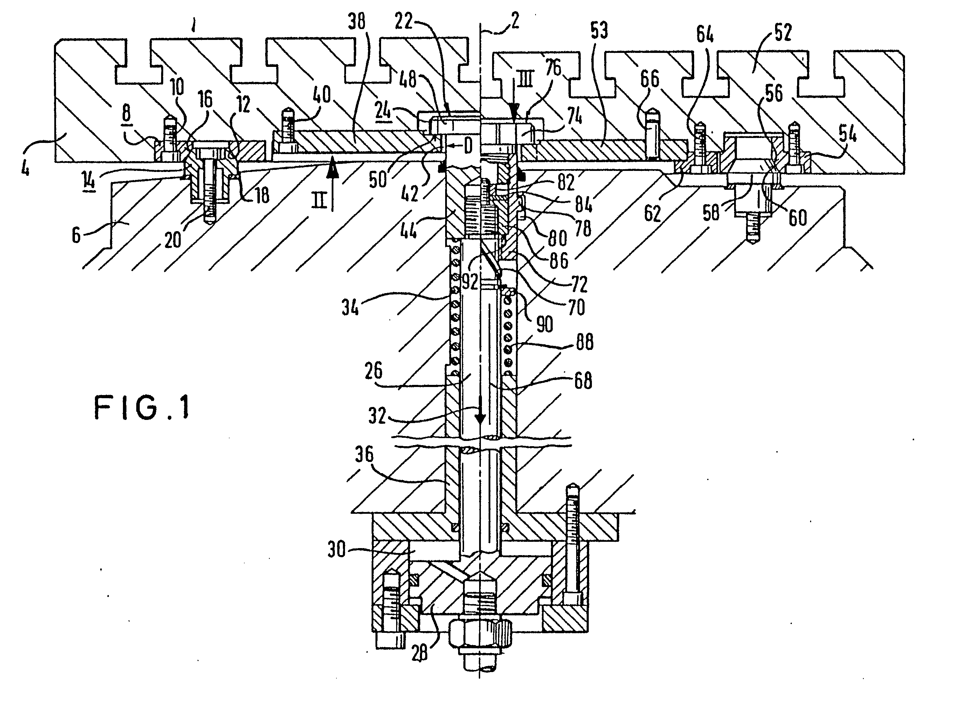

Fig. 1 zeigt links von der Symmetrielinie 2 einen Maschinentisch 4, welcher als Wechselpalette ausgebildet ist. Diese kann beispielsweise auf einem Spannplatz für eine Bearbeitung vorbereitet, d. h. mit einem Werkstück bestückt werden, und dann auf einer oder nacheinander auf mehreren Bearbeitungsmaschinen aufgespannt werden. Der Maschinentisch wird dazu mittels geeigneter Transporteinrichtungen über das Maschinengestell 6 gebracht und abgesetzt. An der Unterseite des Maschinentisches sind besondere Einsatzstücke 8 mittels Schrauben 10 befestigt, an denen genau bearbeitete Auflageflächen 12 ausgebildet sind. An der Oberseite des Maschinengestells 6 sind Stützzapfen 14 eingesetzt, an denen jeweils zu den Auflageflächen 12 komplementäre Stützflächen 16 ausgebildet sind. Die Stützzapfen können über Unterlegringe 18 in ihrer Höhe genau justiert und mittels Schrauben 20 befestigt werden. Zur Aufnahme des Maschinentisches sind beispielsweise drei oder mehr Stützzapfen vorgesehen.

Zum Spannen des Maschinentisches 4 auf dem Maschinengestell 6 dient ein zentrales Spannorgan 22. Dieses besteht im wesentlichen aus einem etwa pilzförmig ausgebildeten Spannkopf 24, welcher mit einer Spannstange 26 fest verbunden ist. Die Spannstange 26 ist an ihrem unteren Ende als hydraulischer Kolben 28 ausgebildet, welcher mittels eines in einen Zylinderraum 30 eingeführten Druckmittels in Richtung des Pfeiles 32 gespannt werden kann. Zum Lösen des Spannorgans 22 wird der Zylinderraum 30 wieder druckentlastet. Eine die Spannstange 26 umgebende Druckfeder 34, welche einerseits gegen den Spannkopf 24 anliegt und sich andererseits gegen eine im Maschinengestell angeordnete Büchse 36 abstützt, hebt den Spannkopf 24, so daß der Maschnentisch wieder abgenommen werden kann.

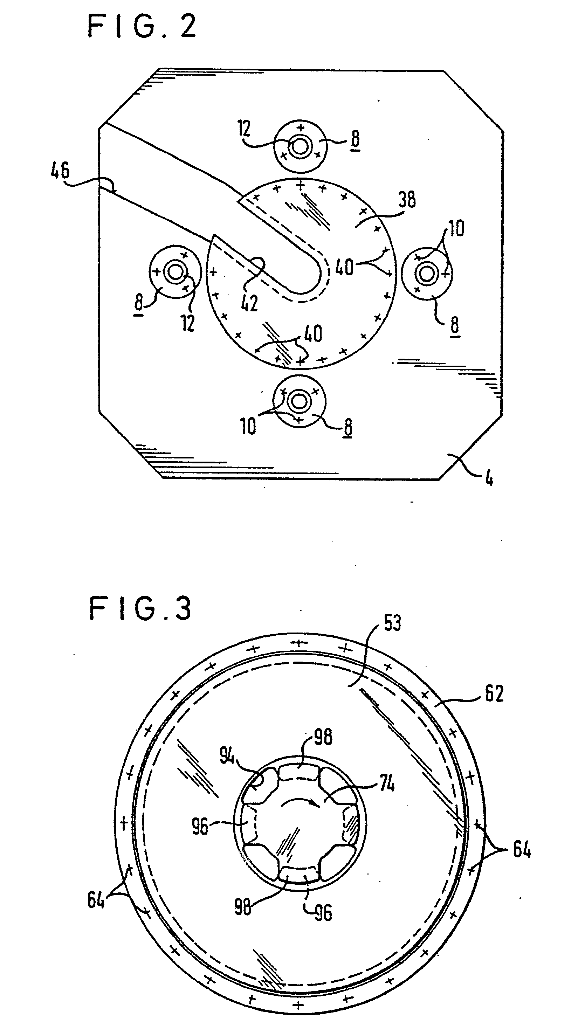

Der Spannkopf 24 greift an einer als Kreisscheibe ausgebildeten Platte 38 an, die mittels Schrauben 40 an der Unterseite des Maschinentisches 4 befestigt ist (siehe auch Fig. 2). Die Platte 38 weist einen von ihrer Mitte radial nach außen verlaufenden Schlitz 42 auf, dessen Breite etwas größer als der Durchmesser D des Spannkopfschaftes 44 ist. Der Maschinentisch 4 weist einen den Schlitz 42 etwa überdeckenden, sich bis zum Tischrand fortsetzenden Schlitz 46 auf, dessen Breite etwas größer als der eigentliche Kopfteil 48 des Spannkopfes 24 ist. Der Maschinentisch kann seitlich auf einem vorgeschriebenen Weg in seine Arbeitslage geschwenkt und dann abgesetzt werden, wobei sich der Spannkopf 24 in die Schlitze 42, 46 einfädelt. Beim Spannen des Spannorgans legt sich der Kopfteil 48 auf den entlang des Schlitzes 42 ausgebildeten, genau bearbeiteten Rand 50 auf und zieht die Platte 38 gegen das Maschinengestell 6. Die Platte, die möglichst steif ausgebildet sein soll, überträgt die Spannkraft über die Schrauben 40 nach außen in den Bereich der Auflageflächen 12, wo der Maschinentisch abgestützt ist, so daß eine Durchbiegung des Maschinentisches in seinem Mittenbereich vermieden wird.

Fig. 1 zeigt rechts von der Symmetrielinie einen Maschinentisch 52 mit einer an seiner Unterseite befestigten Platte 53. Der Maschinentisch weist ebenfalls Einsatzstücke 54 mit Auflageflächen 56 auf, die sich auf Stützzapfen 58 mit Stützflächen 60 auflegen. Die Platte 53 wird über einen Spannring 62 gehalten, welcher seinerseits über Schrauben 64 am Maschinentisch 52 angeschraubt ist. Auf diese Weise wird vermieden, daß die unvermeidliche Durchbiegung der Platte 53 im Bereich der Befestigung am Maschinentisch zu Verspannungen führt. Ein Paßstift 66 verhindert eine Drehung der Platte 53.

Die Spannstange 68 ist in ihrem oberen Bereich mit einem Flachgewinde 70 versehen, auf welchem eine Hülse 72 drehbar angeordnet ist. Diese Hülse 72 bildet mit dem damit verschraubten Kopfteil 74 den Spannkopf 76. Die Hülse 72 greift mit einem an ihr ausgebildeten Nocken 78 in eine kulissenartige Ausnehmung 80 ein derart, daß der Spannkopf in der gelösten, oberen Stellung nicht nach unten fallen kann, wie nicht näher dargestellt zu werden braucht. Auf der Spannstange 68 ist am oberen Ende über eine Mutter 82 und einen Abstimmring 84 ein Druckstück 86 befestigt. Die Funktion des Spannkopfes 76 ist folgende:

Zum Lösen des Spannorgans wird, wie bereits beschrieben, der Zylinderraum druckentlastet, so daß die Druckfeder 88 die Spannstange 68 über den Druckring 90 nach oben schiebt. Dabei wird zunächst die Hülse 72 mitgenommen, wobei der Nocken 78 in der Ausnehmung so geführt ist, daß sich die Hülse 72 nicht dreht. Wenn der Nocken 78 am oberen Anschlag anstößt, bewirkt die weitere Aufwärtsbewegung der Spannstange eine Verdrehung der Hülse 72 mit dem Kopfteil 74, wobei sich die bajonettartige Verbindung des Kopfteils 74 mit der Platte 53 löst, wie noch beschrieben wird. Der Maschinentisch kann nach oben abgehoben werden. Beim Spannen der Spannstange in Richtung des Pfeiles 32 wird die Hülse über das Flachgewinde 70 wieder zurückgedreht (s. Fig. 3), bis der Nocken 78 in der Ausnehmung 80 nach unten frei, an weiterer Verdrehung jedoch gehindert wird; gleichzeitig legt sich das Druckstück 86 mit seiner Unterseite auf den Innenbund 92 der Hülse 72 und nimmt diese mit, so daß sie über die Platte 53 den Maschinentisch spannt.

In Fig. 3 ist die Platte 53 in einer Draufsicht entsprechend dem Pfeil III gezeigt. Die Platte 53 weist eine zentrale Öffnung 94 auf mit mehreren radialen Vorsprüngen 96, hinter die in an sich bekannter Weise am um 90° drehbaren Kopfteil 74 ausgebildete Ansätze 98 greifen.

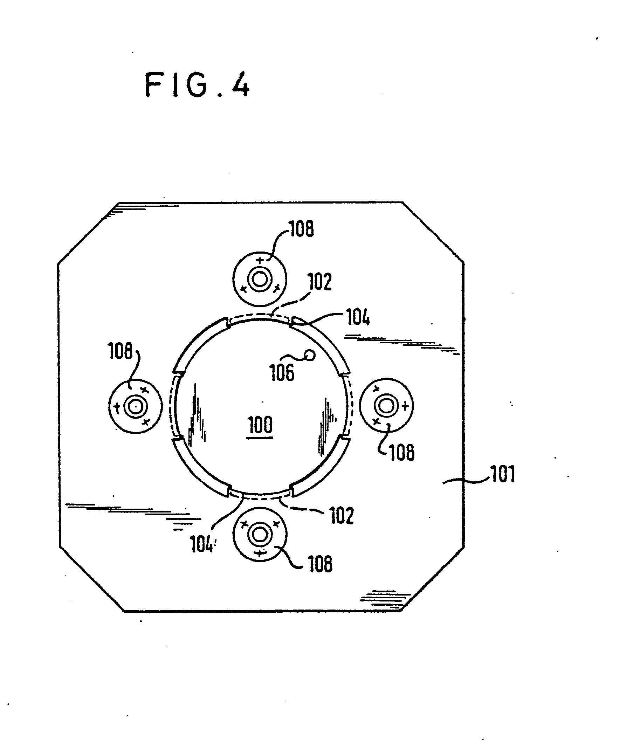

Fig. 4 zeigt eine Ansicht etwa gemäß Fig. 2. Dabei ist jedoch die Platte 100 nicht am Maschinentisch 101 verschraubt, sondern mit ihrem bajonettartig ausgebildeten Außenrand 102 an dem entsprechend ausgebildeten Innenrand 104 des Maschinentisches 101 verbunden. Ein Paßstift 106 sichert die Platte gegen Verdrehung. Bei dieser Ausbildung werden Kräfte jeweils vorwiegend im Bereich der vier Stützzapfen 108 von der Platte 100 auf den Maschinentisch 101 übertragen, so daß eine fast vollkommene Absicherung gegen Durchbiegung der Tischplatte gegeben ist. Die Übertragung der Spannkraft vom Spannorgan auf die Platte 100 erfolgt wie im Fall der Platte 53 (Fig. 1, rechte Seite sowie Fig. 3) über eine Bajonettverbindung. Die entsprechende Ausnehmung in der Platte 100 für den Durchgriff eines Spannkopfes ist der besseren Übersicht wegen nicht dargestellt.

**Patentansprüche:**

1. Einrichtung zum Spannen eines Maschinentisches, (4, 52, 101) o. dgl. auf einem Maschinenbett (6), wobei der Maschinentisch mit mehreren im Abstand von der Tischmitte an der Tischunterseite ausgebildeten Auflageflächen , (12, 56) auf entsprechenden Stützflächen, (16, 60) des Maschinenbettes aufliegt, dadurch gekennzeichnet, daß ein einziges zentrales, an der Unterseite des Maschinentisches (4, 52, 101) angreifendes Spannorgan (22, 76) vorgesehen ist sowie, vom Spannorgan bis an den Bereich der Auflageflächen (12, 56) seichende Übertragungsmittel (38, 53, 100) zur Übertragung der vom Spannorgan aufgebrachten Spannkraft in den Bereich der Auflageflächen (12, 56) des Maschinentisches (4, 52, 101).

2. Einrichtung nach Anspruch 1, dadurch gekennzeichnet, daß die Übertragungsmittel durch eine Platte (38, 53, 100) o. dgl. gebildet werden, welche zumindest im Bereich der Auflageflächen (12, 56) mit der Unterseite des Maschinentisches (4, 52, 101) verbunden ist und die in ihrem Mittenbereich eine Einrichtung für das Angreifen des Spannorgans (22, 76) aufweist.

3. Einrichtung nach Anspruch 2, dadurch gekennzeichnet, daß die Platte (53) als Kreisscheibe ausgebildet ist, welche mit ihrem Außenrand an dem Maschinentisch (52) befestigt ist, und daß sie in der Mitte eine Öffnung (94) aufweist, in die das Spannorgan (76) bajonettartig eingreift, und daß das Spannorgan (76) mit einem bei der Spann- bzw. Lösebewegung automatisch verdrehbaren Spannkopf versehen ist.

4. Einrichtung nach Anspruch 2, dadurch gekennzeichnet, daß die Platte (38) als radial geschlitzte Kreisscheibe ausgebildet ist, welche mit ihrem Außenrand an dem Maschinentisch (4) befestigt ist, und daß das Spannorgan (22) mit einem pilzartig den Schlitz (42) übergreifenden Spannkopf (24) versehen ist.

5. Einrichtung nach einem der Ansprüche 2 bis 4, dadurch gekennzeichnet, daß die Platte (38) an dem Maschinentisch (4) durch Schrauben (40) befestigt ist.

6. Einrichtung nach einem der Ansprüche 2 bis 4, dadurch gekennzeichnet, daß die Platte (53) am Maschinentisch (52) über einen Haltering (62) befestigt ist, welcher seinerseits mittels Schrauben (64) am Maschinentisch gehalten wird.

7. Einrichtung nach einem der Ansprüche 2 bis 4, dadurch gekennzeichnet, daß die Platte (100) bajonettartig mit dem Maschinentisch (101) verbunden ist.

## Claims

1. Device for tightening an engine table or the like on an engine bed, in which the engine table lies with several bearing surfaces, formed on the underside of the table at a distance from the centre of the table, on corresponding support surfaces of the engine bed, characterised in that a single central tightening element (22, 76), acting on the underside of the engine table (4, 52, 101), is provided as well as transmission means (38, 53, 100) for transmitting the tension force, generated by the tightening element, into the zone of the bearing surfaces (12, 56) of the engine table (4, 52, 101).

2. Device according to Claim 1, characterised in that the transmission means are formed by a plate (38, 53, 100) or the like, which is joined to the underside of the engine table (4, 52, 101), at least in the zone of the bearing surfaces (12, 56), and which comprises in its central zone a device for the action of the tightening element (22, 76).

3. Device according to Claim 2, characterised in that the plate (53) is designed as a circular disk, the outer edge of which is fixed to the engine table (52), and that it contains a central aperture (94) in which the tightening element (76) engages in the manner of a bayonet and that the tightening element (76) is provided with a tightening grip which is automatically rotatable during the tightening and loosening movements respectively.

4. Device according to Claim 2, characterised in that the plate (38) is designed as a radially slotted circular disk, the outer edge of which is fixed to the engine table (4), and that the tightening element (22) is provided with a tightening grip (24) which overlaps the slot (42) in the manner of a mushroom.

5. Device according to one of the Claims 2 to 4, characterised in that the plate (38) is fixed to the engine table (4) by means os screws (40).

6. Device according to one of the Claims 2 to 4, characterised in that the plate (53) is fixed to the engine table (52) by way of a support ring (62) which, in turn, is held to the engine table by means of screws (64).

7. Device according to one of the Claims 2 to 4, characterised in that the plate (100) is joined to the engine table (101) in the manner of a bayonet.

## Revendications

1. Dispositif pour le serrage d'une table de machine-outil (4, 52, 101) ou similaire sur un banc de machine (6), dans lequel la table de machine-outil repose sur des surfaces d'appui correspondantes du banc de machine par plusieurs surfaces de support realisées sur le côte inférieur de la table avec un ecartement par rapport au milieu de la table, caracterise en ce qu'il comprend un organe de serrage central unique (22, 76) en prise sur le côte inférieur de la table de la machine-outil (4, 52, 101) ainsi que des moyens de transfert (38, 53, 100) pour transmettre la force de serrage developpée par l'organe de serrage dans la zone des surfaces de support (12, 56) de la machine-outil (4, 52, 101).

2. Dispositif selon la reveridication 1, caracterise en ce les moyens de transfert sont constitues par une plaque (38, 53, 100) ou similaire, qui est reliée au côte inférieur de la table de machine-outil (4, 52, 101) au moins dans la zone des surfaces de support (12, 56), et qui comporte dans sa zone mediane un dispositif pour la prehension de l'organe de serrage (22, 76).

3. Dispositif selon la revendication 2, caracterisé en ce que la plaque (53) est formee par un disque circulaire fixé a la table (52) de la machine-outil par son bord exterieur, et qui presente dans son milieu une ouverture (94), dans laquelle l'organe de serrage (76) est en prise a la façon d'une baionnette, et en ce que l'organe de serrage (76) est pourvu d'une tête de serrage pouvant tourner automatiquement lors du mouvement de serrage ou de libération.

4. Dispositif selon la revendication 2, caractérisé en ce que la plaque (38) est constituée par un disque circulaire fendu radialment, qui est fixe a la table (4) de la machine-outil par son bord exterieur, et en ce que l'organe de serrage (22) est muni d'une tête de serrage (24) qui recouvre la fente (42) a la manière d'un champignon.

5. Dispositif selon l'une des revendications 2 á 4, caractérisé en ce que la plaque (38) est fixée par des vis (40) a la table (4) de la machine-outil.

6. Dispositif suivant l'une des revendications 2 á 4, caracterisé en ce que la plaque (53) est fixée par une bague de maintien (62) a la table (52) de la machine-outil, cette bague etant maintenue de son côté par des vis (64) sur la table de la machine-outil.

7. Dispositif suivant l'une des revendications 2 á 4, caractérisé en ce que la plaque (100) est reliée a la table (101) de la machine-outil a la maniere d'une baionnette.

FIG.1

# FIG. 2

# FIG.3

# FIG.4